# EUROPEAN PATENT APPLICATION

(11) **EP 3 901 869 A1**
(43) Date of publication of application: **27.10.2021**
(21) Application number: 21163680.8
(22) Date of filing: 19.03.2021
(51) Int. Cl.: G06Q 10/06, G06Q 10/10

(54) **WORK PERFORMANCE MANAGEMENT SYSTEM, WORK PERFORMANCE MANAGEMENT METHOD, AND PROGRAM**

(30) Priority: 20.04.2020 JP 2020074765
(71) Applicant: MITSUBISHI HEAVY INDUSTRIES, LTD., Chiyoda-ku, Tokyo 100-8332 (JP)
(72) Inventor: Kawamura, Naoya, Tokyo, 100-8332 (JP); Koga, Yuichi, Tokyo, 100-8332 (JP); Ota, Yuki, Tokyo, 100-8332 (JP)
(74) Representative: Hoffmann Eitle

(57) **Abstract**

Provided is a work performance management system capable of registering work performance regardless of communication state.

The work performance management system includes one or a plurality of terminal devices and a server. The terminal device includes a database configured to store work performance information indicating a situation of execution of work, and a control unit configured to accept an input of the work performance information, transmit the work performance information to the server in a state in which communication is possible, and register the work performance information in the database in a state in which communication is not possible, and the server includes a work performance information integration unit configured to acquire the work performance information transmitted from the terminal device and integrate the acquired information so as to be logically matched.

## Description

### BACKGROUND OF THE INVENTION

### Field of the Invention

The present disclosure relates to a work performance management system, a work performance management method, and a program.

### Description of Related Art

In manufacturing plants or warehouses of products, a work performance management system that manages work completion performance of field workers may be introduced. For example, when a worker inputs work performance information such as the start or completion of work to a mobile device that he or she carries, the mobile device transmits the input work performance information to a server, and the server stores work performance information of each worker. Generally, when a mobile device is connected to the Internet and used at a workplace such as a plant, the communication environment is improved by increasing the number of wireless access points. Incidentally, at a workplace, it may be difficult to always realize a good communication state due to the existence of structures that interfere with radio waves or the influence of radio wave interference or the like caused by the use of a large number of communication devices.

As a relevant technique, Patent Document 1 discloses a system in which, when workers assigned to each process perform assembly work on the basis of assembly work instructions displayed on displays, work performance information of each worker is collected by collection instruments provided in workshops of each process, and the collected work performance information is transmitted to a server through a network.

### [Patent Document]

[Patent Document 1] Japanese Unexamined Patent Application, First Publication No. 2019-179393

### SUMMARY OF THE INVENTION

In a general work performance management system, even when a worker inputs work performance information to a mobile device in a state in which communication is not possible, the information is not transmitted to a server, and the work performance information of the worker is often missing on the server side. In addition, when a state in which communication is not possible occurs, an error message is displayed on the mobile device, and when such a state occurs frequently, there is the possibility of the worker neglecting to input the work performance information.

There is a need for a system in which each worker can input work performance information of work without any inconvenience even in an environment in which communication is unstable, and work performance information which is input in a state in which communication is not possible can be collected and managed on the server side.

The present disclosure provides a work performance management system, a work performance management method, and a program that make it possible to solve the above problems.

According to the present disclosure, a work performance management system is provided including: one or a plurality of terminal devices; and a server, wherein the terminal device includes a database configured to store work performance information indicating a situation of execution of work, and a control unit configured to accept an input of the work performance information, transmit the work performance information to the server in a state in which communication is possible, and register the work performance information in the database in a state in which communication is not possible, and the server includes a work performance information integration unit configured to acquire the work performance information transmitted from the terminal device and integrate the acquired information so as to be logically matched.

In addition, according to the present disclosure, a work performance management method is provided including: a step of causing a terminal device to acquire work performance information indicating a situation of execution of work; a step of causing the terminal device to confirm a state of communication with a server; a step of causing the terminal device to register the work performance information in a database included in the terminal device in a state in which communication is not possible; a step of causing the terminal device to transmit the work performance information to the server in a state in which communication is possible; and a step of causing the server to acquire the work performance information transmitted from the terminal device and integrate the acquired information so as to be logically matched.

In addition, according to the present disclosure, a program is provided causing a computer of a terminal device to execute: a step of acquiring work performance information indicating a situation of execution of work; a step of confirming a state of communication with a server; a step of registering the work performance information in a database included in the terminal device in a state in which communication is not possible; and a step of transmitting the work performance information to the server in a state in which communication is possible, and causing a computer of the server to execute a step of acquiring the work performance information transmitted from the terminal device and integrating the acquired information so as to be logically matched.

According to the work performance management system, the work management method, and the program described above, it is possible to manage work performance information which is input in an environment in which communication is unstable.

### BRIEF DESCRIPTION OF THE DRAWINGS

Fig. 1 is a schematic diagram of a work performance management system according to an embodiment.
Fig. 2 is a functional block diagram of the work performance management system according to an embodiment.
Fig. 3 is a first diagram illustrating an integration process of work performance information according to an embodiment.
Fig. 4 is a second diagram illustrating the integration process of the work performance information according to an embodiment.
Fig. 5 is a third diagram illustrating the integration process of the work performance information according to an embodiment.
Fig. 6 is a fourth diagram illustrating the integration process of the work performance information according to an embodiment.
Fig. 7 is a first flowchart illustrating an example of processing of a terminal device according to an embodiment.
Fig. 8 is a second flowchart illustrating an example of processing of the terminal device according to an embodiment.
Fig. 9 is a first flowchart illustrating an example of processing of a server according to an embodiment.
Fig. 10 is a second flowchart illustrating an example of processing of the server according to an embodiment.
Fig. 11 is a diagram illustrating an example of a hardware configuration of the work performance management system according to an embodiment.

### DETAILED DESCRIPTION OF THE INVENTION

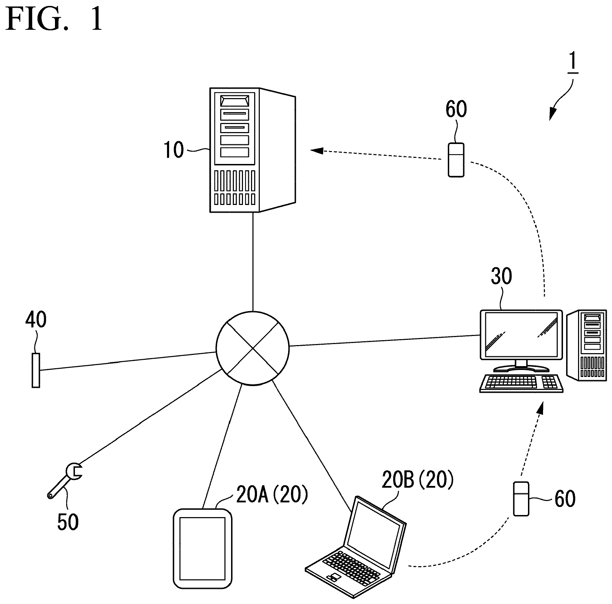

Hereinafter, a work performance management system according to each embodiment will be described in detail with reference to Figs. 1 to 11.

### <Embodiment>

### (System configuration)

Fig. 1 is a diagram illustrating an example of a work performance management system according to a first embodiment.

A work performance management system 1 is a system that manages information on completion of work performed by a worker in a plant, a warehouse, or the like. The work performance management system 1 is configured to include a server 10 that stores work performance information, a portable terminal device 20A such as a smartphone, a tablet, or a wearable terminal, a terminal device 20B such as a note-type PC or a desktop-type PC installed in a workplace, various sensors 40 such as a temperature sensor or a camera provided in a workplace or a work target, instruments or tools that have a communication function and are used for work (collectively referred to as a tool 50), a terminal device 30 for management such as a PC installed in an office or the like, and a portable storage medium 60 such as a USB. The server 10, the terminal devices 20A and 20B, the sensor 40, the tool 50, and the terminal device 30 for management are connected to each other so that wired or wireless communication can be performed through a network.

The numbers of terminal devices 20A and 20B, sensors 40, and tools 50 are not limited to those shown in the drawing, and there may be two or more of these. Hereinafter, a case where work performance in a plant is managed will be described as an example.

For example, a worker carries the terminal device 20A, inputs information indicating the start of work to the terminal device 20A when starting the work of which he or she is in charge, and inputs information indicating the completion of the work to the terminal device 20A when the work is completed. Alternatively, at the start and finish of work, the worker inputs information indicating the start and finish of the work to the terminal device 20B installed in a workplace. For example, the start, finish, interruption, resumption, and cancellation of work can be input to the terminal devices 20A and 20B. Information indicating the start, finish, interruption, resumption, and cancellation of work is collectively referred to as work performance information. In addition, the interruption of work is input when work is temporarily left for rest or the like, and the resumption thereof is input when the work is returned to after the rest. In addition, the cancellation of work is input in a case where the start of work is input once but the work is not actually performed (such as, for example, a case where the start is input by mistake or a case where the schedule of work is changed).

When the worker inputs the work performance information, the terminal devices 20A and 20B transmit the input work performance information to the server 10 through a network. The server 10 receives the work performance information and registers it in a database (a work performance DB). In the work performance DB, identification information, start time, interruption time, resumption time, finish time, and the like of executed work are registered for each worker.

The work performance information may be transferred to the server 10 through the terminal device 30 for management. For example, the terminal devices 20A and 20B transmit the work management information to the terminal device 30 for management, and the terminal device 30 for management receives this information and transfers it to the server 10. Alternatively, the terminal device 30 for management outputs the work performance information to a display device, and a manager confirms the work situation of each worker. The manager performs a confirmed operation on the terminal device 30 for management with respect to the confirmed work performance information. Then, the terminal device 30 for management transmits the work performance information confirmed by the manager to the server 10.

The work performance information may be transferred (copied) to the server 10 by the portable storage medium 60 such as a USB without going through a network. For example, the work performance information is copied from the terminal device 20B to the storage medium 60. The person in charge transports the storage medium 60 to the server 10, and makes a copy from the storage medium 60 to the server 10. Alternatively, the person in charge transports the storage medium 60 in which the work performance information is copied to the terminal device 30 for management, and copies it to the terminal device 30 for management. Thereafter, the work performance information may be transmitted from the terminal device 30 for management to the server 10 through a network, or may be transferred using the storage medium 60 again from the terminal device 30 for management to the server 10. Alternatively, the work performance information may be transmitted from the terminal devices 20A and 20B to the terminal device 30 for management through a network, and the work performance information may be transferred using the storage medium 60 from the terminal device 30 for management to the server 10.

In addition, the work performance information is not necessarily input to the terminal devices 20A and 20B. For example, in a case where, when certain work is performed, it is known that sensor information of an instrument or a medium relating to the work changes (for example, the temperature of water or a chemical liquid of a treatment tank in a surface treatment process changes), work start, work in progress, and work finish may be determined on the basis of the detection value of the sensor 40, and may be registered in the work performance DB as work performance information of a person in charge of the work. In addition, in a case where the sensor 40 is a camera, an image captured by the camera may be analyzed to determine the start, finish, or the like of work, and a time at which the image is captured may be registered in the work performance DB as the start time and finish time of the work. In addition, in the case of a work process in which bolts are fastened using a torque wrench with a communication function, the start and finish of the fastening work may be determined on the basis of a control signal transmitted by the torque wrench (the tool 50) (for example, a torque value is transmitted from the tool 50 during the work), and may be registered in the work performance DB as work performance information of a person in charge of the fastening work.

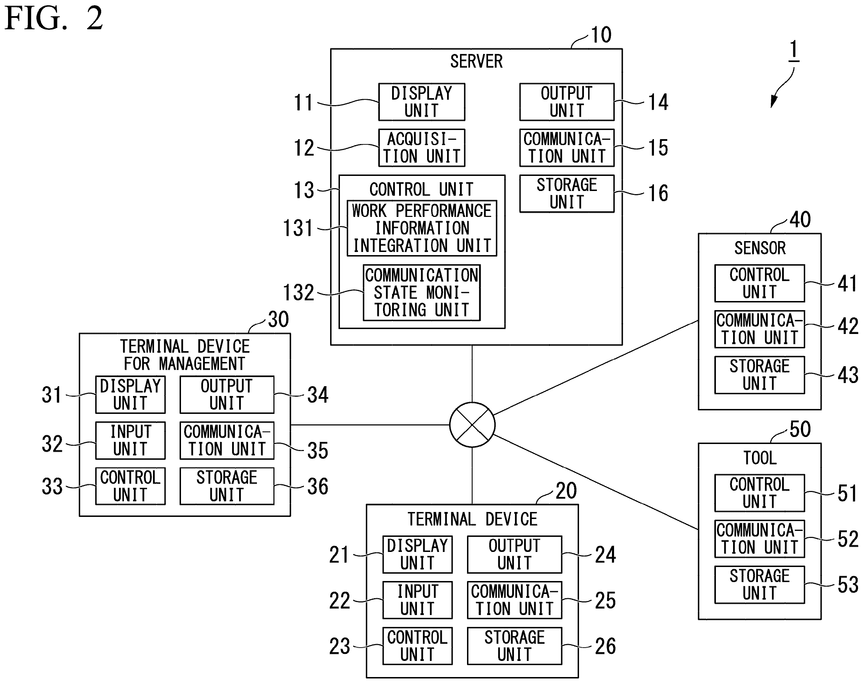

Here, it is only required that a network always be in a state in which communication is possible. However, for example, in a case where the terminal device 20A is connected to a network by wireless communication, communication may not be possible because the situation of reception of radio waves may be poor in some workplaces. In a work completion system of the related art, the work performance information often cannot be registered in the work performance DB of the server 10 in a situation in which communication is not possible. In a general plant or the like, it is possible to avoid a situation in which communication is not possible by increasing the number of access points. However, in the case of a large-scale plant, it may not be realistic to increase the number of access points such that a good communication state can always be realized, or it may be difficult to avoid a situation in which communication is not possible with an increase in the number of access points alone depending on the nature of products handled in a plant. Consequently, the present embodiment provides a function that makes it possible for each worker to register work performance information without any inconvenience even if communication is in an unstable state, and to collect the work performance information of all the workers using a timing at which the communication situation is good on the server side. Specifically, the following functions are provided: (1) a function of registering work performance information in an off-line state (a state in which communication is not possible), (2) a function of transferring data of the work performance information at the time of change to an on-line state (a state in which communication is possible), and (3) a function of logically integrating the work performance information registered in an off-line state and the work performance information registered in an on-line state. Next, a functional configuration for realizing these functions of (1) to (3) will be described with reference to Fig. 2.

Fig. 2 is a functional block diagram of the work performance management system according to an embodiment.

The server 10 includes a display unit 11, an acquisition unit 12, a control unit 13, a work performance information integration unit 131, a communication state monitoring unit 132, an output unit 14, a communication unit 15, and a storage unit 16.

The display unit 11 is a display device using a liquid crystal display, an organic EL display, or the like.

The acquisition unit 12 acquires the work performance information transferred by the storage medium 60, and outputs it to the work performance information integration unit 131.

The control unit 13 performs the registration of the work performance information, the transmission of latest work performance information to the terminal devices 20A and 20B, or the like. The control unit 13 includes the work performance information integration unit 131 and the communication state monitoring unit 132.

The work performance information integration unit 131 integrates work performance information transmitted from a plurality of terminal devices 20 and work performance information transferred by the storage medium 60. For example, in a case where a terminal device 20 in an off-line state enters an on-line state, work performance information transmitted from the terminal device 20 and registered work performance information transmitted from a terminal device 20 in an on-line state are integrated so as to be logically matched on the basis of a predetermined rule (a job rule or a person rule).

The communication state monitoring unit 132 monitors the communication states of the terminal devices 20, and extracts a terminal device 20 that is in a state in which communication is not possible for a constant period of time.

The output unit 14 outputs work performance information after integration, identification information of the terminal device 20 in which communication is not possible for a constant period of time, and the like to the display unit 11.

The communication unit 15 communicates with another device. In addition, the communication unit 15 detects whether communication with another device is possible, and outputs the result to the communication state monitoring unit 132.

The storage unit 16 stores the work performance DB or the work performance information received from the terminal device 20.

The terminal devices 20A and 20B are collectively referred to as the terminal device 20.

The terminal device 20 includes a display unit 21, an input unit 22, a control unit 23, an output unit 24, a communication unit 25, and a storage unit 26.

The display unit 21 is a display device using a liquid crystal display, an organic EL display, or the like.

The input unit 22 includes a keyboard, a mouse, a touch panel, or the like, and outputs an operation signal corresponding to a worker's operation to the control unit 23.

The control unit 23 transmits work performance information which is input by a worker to a server using the communication unit 25 in accordance with a communication state, or records it in the storage unit 26. In addition, the control unit 23 generates an input screen of the work performance information (for example, a work performance registration screen 200 to be described later).

The output unit 24 outputs the input screen of the work performance information to the display unit 21. In addition, the output unit 24 outputs the work performance information which is input during an off-line state to the storage medium 60.

The communication unit 25 communicates with another device. In addition, the communication unit 25 detects whether communication with another device is possible, and outputs the result to the control unit 23.

The storage unit 26 stores the same work performance information DB (local) as work performance information DB of the server 10, or the like.

Hereinafter, a display unit included in the terminal device 20A is referred to as a display unit 21A. The same is true of other functional units.

The terminal device 30 for management includes a display unit 31, an input unit 32, a control unit 33, an output unit 34, a communication unit 35, and a storage unit 36.

The display unit 31 is a display device using a liquid crystal display, an organic EL display, or the like. The input unit 32 includes a keyboard, a mouse, a touch panel, or the like, and outputs an operation signal corresponding to a manager's operation to the control unit 33.

The control unit 33 transfers the work performance information to the server 10 using the communication unit 35, or outputs it to the storage medium 60 using the output unit 34.

The output unit 34 outputs the work performance information to the storage medium 60. In addition, the output unit 34 outputs the work performance information to the display unit 31.

The communication unit 35 communicates with another device. For example, the communication unit 35 receives the work performance information from the terminal device 20, and transmits the work performance information to the server 10. In addition, the communication unit 35 detects whether communication with another device is possible, and outputs the result to the control unit 33.

The storage unit 36 stores the work performance information or the like.

The sensor 40 includes a control unit 41, a communication unit 42, and a storage unit 43.

The control unit 41 transmits a detection value detected by the sensor 40 in an on-line state to the server 10 using the communication unit 42. The control unit 41 records a detection value detected by the sensor 40 in an off-line state in the storage unit 43. In the case of change from an off-line state to an on-line state, the control unit 41 transmits the detection value recorded in the storage unit 43 during an off-line state to the server 10 using the communication unit 42.

The communication unit 42 transmits the detection value detected by the sensor 40. In addition, the communication unit 42 detects whether communication with the server 10 is possible, and outputs the result to the control unit 41.

The storage unit 43 stores the detection value detected by the sensor 40.

The tool 50 includes a control unit 51, a communication unit 52, and a storage unit 53.

The control unit 51 transmits a control signal which is output by the tool 50 in an on-line state to the server 10 using the communication unit 52. The control unit 51 records a control signal which is output by the tool 50 in an off-line state to the storage unit 53. In the case of change from an off-line state to an on-line state, the control unit 51 transmits the control signal recorded in the storage unit 53 during an off-line state to the server 10 using the communication unit 52.

The communication unit 52 transmits the control signal which is output by the tool 50. In addition, the communication unit 52 detects whether communication with the server 10 is possible and outputs the result to the control unit 51.

The storage unit 53 stores the control signal which is output by the tool 50.

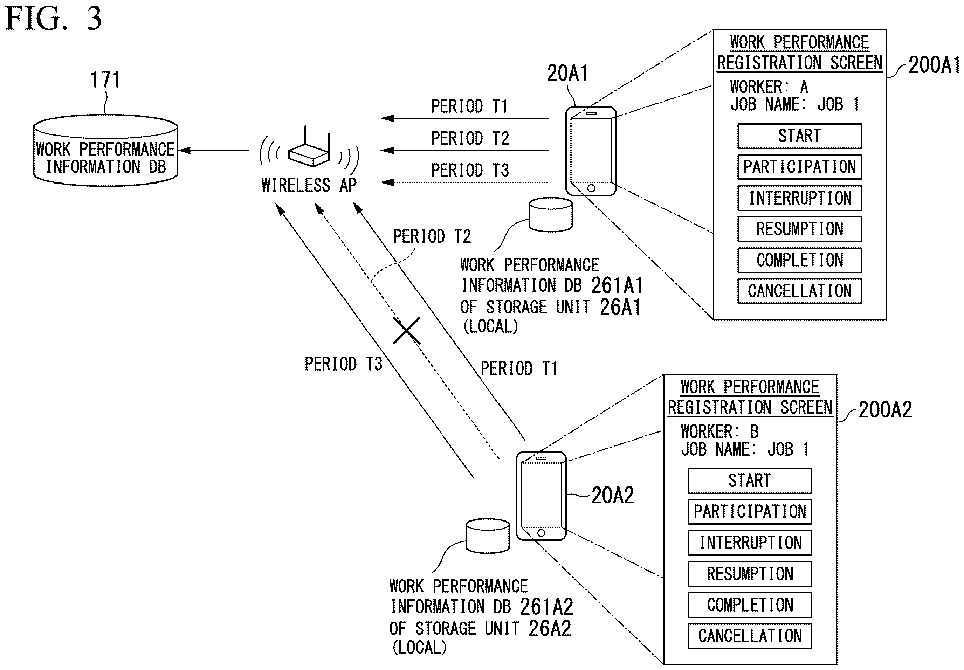

Next, a process of integrating the work performance information will be described with reference to Figs. 3 to 6. Figs. 3 to 6 are first to fourth drawings illustrating a process of integrating the work performance information according to an embodiment.

First, reference will be made to Fig. 3. Fig. 3 shows a change in a communication situation between a terminal device 20A1 used by a worker A and a terminal device 20A2 used by a worker B. In a period T1, both the terminal devices 20A1 and 20A2 are in an on-line state. In a period T2, the terminal device 20A1 is in an on-line state, and the terminal device 20A2 is in an off-line state. In a period T3, both the terminal devices 20A1 and 20A2 are in an on-line state. Here, in the period T1, both the worker A and the worker B execute a job 1. In the period T2, both the worker A and the worker B execute a job 2.

A work performance registration screen 200A1 is displayed on a display unit 21A1 of the terminal device 20A1. This is an input screen generated by a control unit 23A1. A similar screen is also displayed on a display unit 21A2 of the terminal device 20A2. Here, both the terminal devices 20A1 and 20A2 are assumed to be in an on-line state. For example, the worker A presses a start button when the job 1 is started. Then, the control unit 23A1 transmits information indicating the start of the job 1 to the server 10 using the communication unit 25. In the server 10, the work performance information integration unit 131 registers a start time of the job 1 performed by the worker A in a work performance information DB 161. In addition, the terminal devices 20A1 and 20A2 hold a work performance information DB 261A1 (local) and a work performance information DB 261A2 (local), respectively. The server 10 and the terminal devices 20A1 and 20A2 communicate with each other to acquire work performance information registered in the work performance information DB 161. For example, in the terminal device 20A1, the control unit 23A1 registers the work performance information acquired from the server 10 in the work performance information DB 261A1 of a storage unit 26A1 (local). The same applies to the terminal device 20A2. That is, when the start of the job 1 is input in the terminal device 20A1 in a case where both the terminal devices 20A1 and 20A2 are in an on-line state, the information is also shared by the terminal device 20A2. Then, a control unit 23A2 of the terminal device 20A2 performs control so that the start button cannot be pressed in a work performance registration screen 200A2. The worker B presses a participation button instead of the start button when the job 1 is started. In a stage in which the worker A inputs the start of the job 1, the job 1 has already been started. Therefore, if the worker B can input the start of the job 1, the job 1 that has already been started is started again, which causes a contradiction. For this reason, the control unit 23A2 invalidates the start button of the terminal device 20A2 so that the worker B cannot input the start of the job 1, and controls the work performance registration screen 200A2 instead so as to perform an input for participating in the job 1 that has already been started. In a case where both the terminal devices are in an on-line state in this manner, the information registered in the work performance information DB 161 of the server 10 is also shared by the terminal devices 20A1 and 20A2, and the input screens (the work performance registration screens 200A1 and 200A2) are controlled so that a contradiction is not caused in the work performance information registered in the server 10 (that is, input to the terminal devices 20A1 and 20A2).

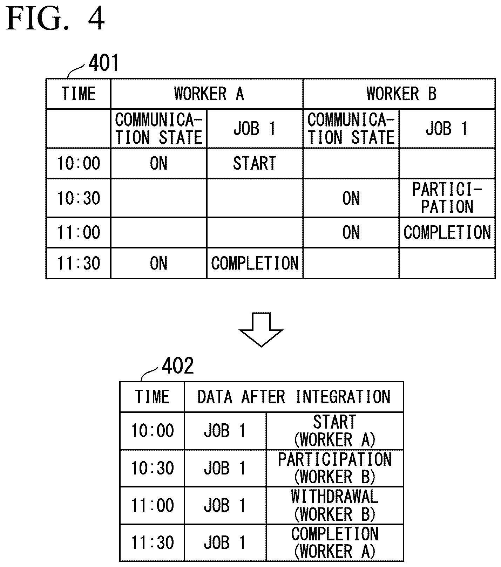

Next, reference will be made to Fig. 4. An upper diagram 401 of Fig. 4 shows time-series work performance information which is input during the period T1 in which both the terminal devices 20A1 and 20A2 are in an on-line state. In this example, the worker A inputs the start of the job 1 (presses the start button) at 10 o'clock, the worker B inputs a participation in the job 1 (presses the participation button) at 10:30, the worker B inputs the completion of the job 1 (presses a completion button) at 11:30, and the worker A inputs the completion of the job 1 (presses the completion button) at 12:00. In the server 10, the input work performance information is received every time, and the work performance information integration unit 131 registers the received work performance information in the work performance information DB 161. For example, the work performance information integration unit 131 registers the start of the job 1 performed by the worker A at 10:00, and registers the participation in the job 1 performed by the worker B at 10:30, and registers the withdrawal of the worker B from the job 1 at 11:00 on the basis of the input of the completion of the job 1 performed by the worker B and the worker A continuing the job 1. In addition, the work performance information integration unit 131 registers the completion of the job 1 at 11:30 on the basis of the input of the completion of the job 1 performed by the worker A and the worker B having already input the completion of the job 1. A lower diagram 402 of Fig. 4 shows work performance information after integration. Information illustrated in the lower diagram 402 is registered in the work performance information DB 161.

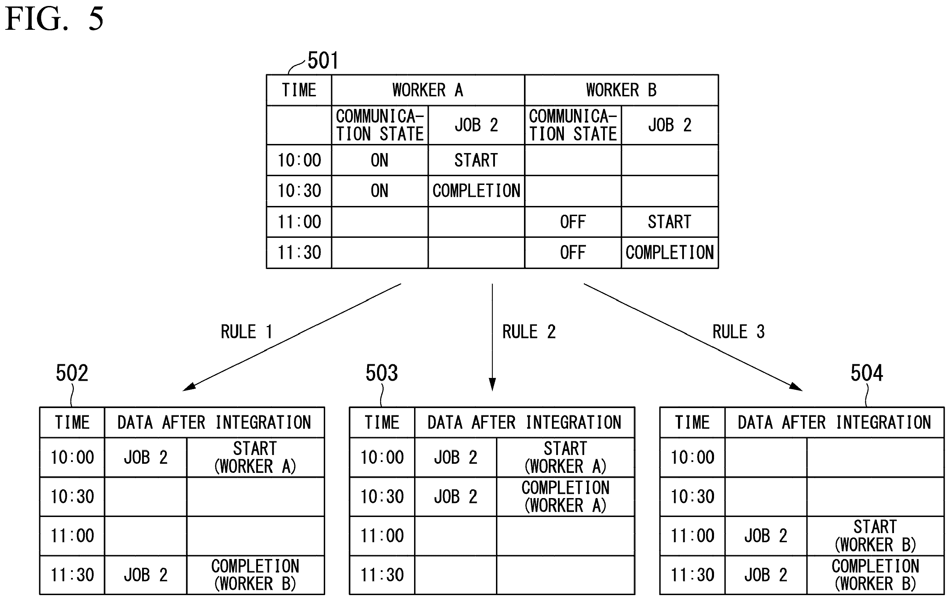

Next, in the period T2, the worker A and the worker B start the job 2. Reference will be made to Fig. 5. An upper diagram 501 of Fig. 5 shows time-series work performance information which is input during the period T2 in which the terminal device 20A1 is in an on-line state and the terminal device 20A2 is in an off-line state. In this example, the worker A inputs the start of the job 2 (presses the start button) at 10:00, and the worker A inputs the completion of the job 2 (presses the completion button) at 10:30. In the server 10, the work performance information is received on-line every time, and the work performance information integration unit 131 registers the received work performance information in the work performance information DB 161. For example, information indicating that the worker A starts the job 2 at 10:00 and completes the job 2 at 10:30 is registered in the work performance information DB 161.

Unlike the period T1, the terminal device 20A2 is in an off-line state, and thus cannot share the latest work performance information registered in the work performance information DB 161 of the server 10. Therefore, in the terminal device 20A2, the start button can be pressed. According to the diagram 501, the worker B inputs the start of the job 2 (presses the start button) at 11:00, and the worker B inputs the completion of the job 2 (presses the completion button) at 11:30. Since the terminal device 20A2 is in an off-line state, the input work performance information is not transmitted to the server 10, and the control unit 23A2 registers the work performance information in the work performance information DB 261A2 (local) stored by the storage unit 26A2. For example, information indicating that the worker B starts the job 2 at 11:00 and completes the job 2 at 11:30 is registered in the work performance information DB 261A2 (local).

Next, in the period T3, the communication state of the terminal device 20A2 changes from an off-line state to an on-line state. Then, the control unit 23A2 transmits the work performance information registered in the work performance information DB 261A2 (local) to the server 10 during an off-line state. The server 10 receives this work performance information, and the work performance information integration unit 131 performs a process of integrating the received work performance information and the work performance information relating to the job 2 having already been registered in the work performance information DB 161. A "job rule" and a "person rule" for integrating the work performance information registered in the terminal device 20A2 during an off-line state so as to logically match the work performance information transmitted from the terminal device 20A1 without a contradiction are registered in the storage unit 16 of the server 10, and the work performance information integration unit 131 performs the integration process on the basis of these rules. First, the work performance information integration unit 131 integrates the work performance information so as to be logically matched from the viewpoint of the job 2 on the basis of the "job rule." For example, in a case where a "job rule 1" of "adopting the start of the job 2 input initially and the completion of the job 2 input finally" is registered in the storage unit 16, the work performance information integration unit 131 corrects the work performance information as shown in a lower diagram 502 of Fig. 5. That is, the work performance information integration unit 131 integrates the content of the upper diagram 501 of Fig. 5 into the content that the job 2 is started at 10:00 and the job 2 is completed at 11:30, and registers it in the work performance information DB 161. This makes it possible to resolve a contradiction that the job 2 started at 10:00 is started again at 11:00, or the job 2 expected to be completed at 10:30 is started again at 11:00. In addition, for example, in a case where a "job rule 2" of "adopting the start of the job 2 input initially and the completion of the job 2 input initially" is registered in the storage unit 16, the work performance information integration unit 131 corrects the work performance information as shown in a lower diagram 503 of Fig. 5. That is, the work performance information integration unit 131 integrates the content of the upper diagram 501 of Fig. 5 into the content that the job 2 is started at 10:00 and the job 2 is completed at 10:30, and registers it in the work performance information DB 161. Thereby, the above contradiction caused when viewed from the viewpoint of the job 2 is resolved. In addition, for example, in a case where a "job rule 3" of "adopting the start of the job 2 input finally and the completion of the job 2 input finally" is registered in the storage unit 16, the work performance information integration unit 131 corrects the work performance information as shown in a lower diagram 504 of Fig. 5. That is, the work performance information integration unit 131 integrates the content of the upper diagram 501 of Fig. 5 into the content that the job 2 is started at 11:00 and the job 2 is completed at 11:30, and registers it in the work performance information DB 161. Thereby, the above contradiction regarding the job 2 is resolved, and the work performance information is corrected to be matched logically.

Next, the work performance information integration unit 131 logically integrates the information from the viewpoints of the workers A and B on the basis of the "person rule." For example, in a case where the person rule that "it begins with the start or participation for one worker (for one job) and ends with the completion or withdrawal; the interruption and completion do not occur before the start; the start, participation, interruption, and resumption do not occur after the completion" is registered in the storage unit 16, the work performance information integration unit 131 corrects the lower diagram 502 of Fig. 5, and does not correct the lower diagrams 503 and 504 of Fig. 5. This is because, in the case of the diagram 502, the worker A starts the job 2, the completion or withdrawal is not recorded thereafter, and for the worker B, only the completion is recorded and the start or participation is not recorded. In a case where the diagram 502 is corrected, for example, the work performance information integration unit 131 may perform correction to the content that the worker A starts the job 2 at 10:00, the worker A withdraws from the job 2 at 10:30, the worker B participates in the job 2 at 11:00, and the worker B completes the job 2 at 11:30. The work performance information which is input during an off-line state and the work performance information which is input to another terminal device 20 can be integrated without a contradiction through such an integration process (a correction process).

The above-described "job rule 1" to "job rule 3" and "person rule" are an example, and the content itself of the rules may be arbitrary.

In addition, in the above example, the terminal device 20A1 is assumed to be in an on-line state, but both the terminal devices 20A1 and 20A2 may be in an off-line state in the period T2. In addition, even in a case where a difference of a predetermined value or more occurs between the terminals at a time when the work performance information reaches the server 10 due to its transfer to the server 10 using the storage medium 60 with respect to at least any one of the terminal devices 20A1 and 20A2 regardless of the communication state, the work performance information integration unit 131 can integrate the work performance information of a plurality of terminal devices 20 so as to be logically matched in the same manner as in the above example. In addition, even in a case where one terminal device 20 is set to be in an on-line state in a certain period t1 and is set to be in an off-line state in a subsequent period t2, the work performance information which is input to the terminal device 20 can be integrated without a contradiction through the same process as above.

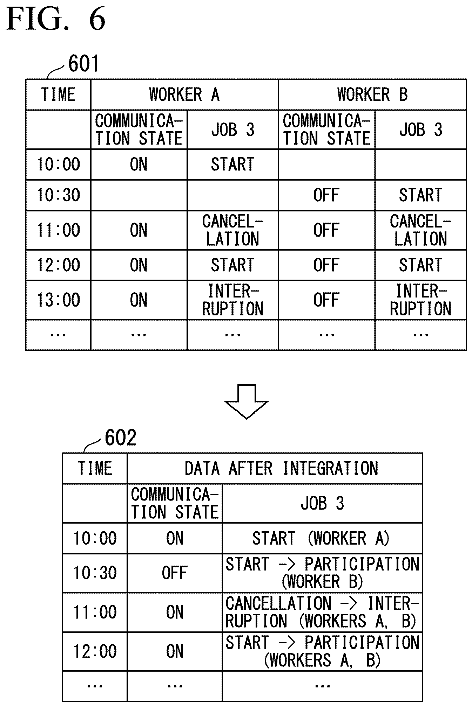

Fig. 6 shows a more complicated example of the integration process. An upper diagram 601 of Fig. 6 shows time-series work performance information which is input during a period in which the terminal device 20A1 is in an on-line state and the terminal device 20A2 is in an off-line state. In this example, the worker A inputs the start of a job 3 at 10:00 to the terminal device 20A1, inputs the cancellation of the job 3 (presses a cancellation button) at 11:00, inputs the start of the job 3 at 12:00, and inputs the interruption of the job 3 (presses an interruption button) at 13:00. In the server 10, the work performance information is received on-line every time, and the work performance information integration unit 131 registers the received work performance information in the work performance information DB 161.

In addition, the worker B inputs the start of the job 3 at 10:30 to the terminal device 20A2, inputs the cancellation of the job 3 at 11:00, inputs the start of the job 3 at 12:00, and inputs the interruption of the job 3 at 13:00. The control unit 23A2 of the terminal device 20A2 registers the work performance information in the work performance information DB 261A2 (local).

Thereafter, when the communication state of the terminal device 20A2 becomes an on-line state, the control unit 23A2 transmits the work performance information registered in the work performance information DB 261A2 (local) to the server 10 using a communication unit 25A2. Then, the work performance information integration unit 131 integrates work performance information as shown in, for example, a diagram 602 on the basis of a predetermined "job rule" and "person rule."

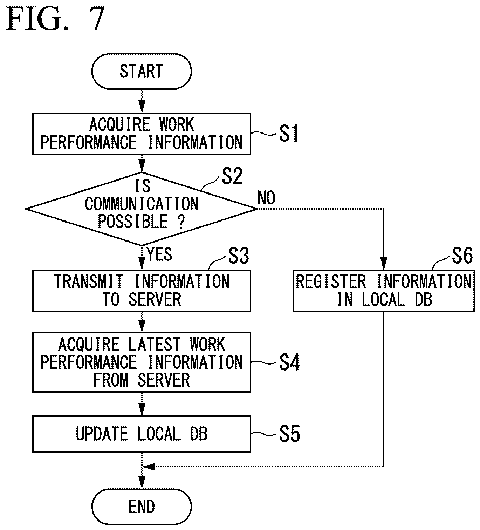

Next, processing when the work performance information is input to the terminal device 20 will be described with reference to Fig. 7.

Fig. 7 is a first flowchart illustrating an example of processing of a terminal device according to an embodiment. A worker inputs the work performance information to the terminal device 20. The input unit 22 acquires the work performance information (step S1), and outputs the work performance information which is input to the control unit 23. The control unit 23 confirms a communication state using the communication unit 25 (step S2). In the case of a state in which communication is possible (step S2; Yes), the control unit 23 transmits the work performance information and its input time to the server 10 using the communication unit 25 (step S3). In a case where the work performance information is transmitted to the server 10, the server 10 performs an integration process, and updates the work performance information DB 161. The server 10 reads out the latest work performance information regarding a job relevant to the received work performance information from the work performance information DB 161, and transmits it to terminal device 20. The server 10 may transmits the latest work performance information to all other terminal devices 20. In the terminal devices 20, the control unit 23 acquires the latest work performance information transmitted from the server 10 through the communication unit 25 (step S4). The control unit 23 writes the acquired latest work performance information in the work performance information DB 261 (local) and updates it (step S5). In addition, in the case of a state in which communication is not possible (step S2; No), the control unit 23 registers the work performance information which is input by a worker in the work performance information DB 261 (local) (step S6). The control unit 23 adds a non-transmission flag and a current time to the work performance information to be registered and registers it in the work performance information DB 261.

Regarding the processes of steps S4 and S5, the terminal device 20 may query the server 10 in a predetermined control period independently of a timing at which the terminal device 20 transmits the work performance information, acquire the latest work performance information, and update the work performance information DB 261.

In the case of the sensor 40, whenever the sensor 40 detects a detection target, the control unit 41 executes step S2, S3 or S6 described above. In the case of the tool 50, whenever a worker operates the tool 50, the control unit 51 executes step S2, S3 or S6 described above.

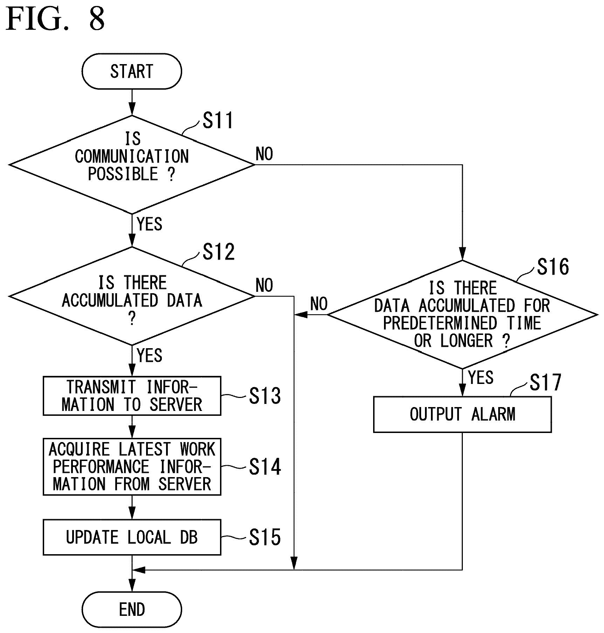

Next, processing when the work performance information is not input to the terminal device 20 will be described with reference to Fig. 8.

Fig. 8 is a second flowchart illustrating an example of processing of the terminal device according to an embodiment.

The control unit 23 performs the following processing in a predetermined control period. First, the control unit 23 confirms a communication state using the communication unit 25 (step S11). In the case of a state in which communication is possible (step S11; Yes), the control unit 23 refers to the work performance information DB 261 (local) to determine whether there is data accumulated without being transmitted to the server 10 (step S12). For example, the control unit 23 makes this determination depending on the presence or absence of work performance information with a non-transmission flag. In a case where there is accumulated data (step S12; Yes), the control unit 23 transmits the accumulated work performance information and its registration time to the server 10 using the communication unit 25 (step S13). The server 10 receives the work performance information, performs the integration process, and transmits the latest work performance information to the terminal device 20. The terminal device 20 acquires the latest work performance information (step S14), and updates the work performance information DB 261 (local) (step S15). In a case where there no accumulated data (step S12; No), the processing is not performed.

In addition, in the case of a state in which communication is not possible (step S12; No), the control unit 23 refers to the work performance information DB 261 (local) to determine whether there is work performance information that has been accumulated for a predetermined time or longer (step S16). For example, the control unit 23 makes a determination of step S16 on the basis of the current time and the registration time of the work performance information with a non-transmission flag. In a case where there is work performance information that has been accumulated for a predetermined time or longer (step S16; Yes), the control unit 23 outputs an alarm using the output unit 24 (step S17). For example, the output unit 24 displays a message for prompting the terminal device 20 to move to an area in which a communication state is good, a message for prompting the terminal device to bring the terminal device 20 into an office and copy the work performance information to the terminal device 30 for management, or the like on the display unit 21. In a case where there is no work performance information that has been accumulated for a predetermined time or longer (step S16; No), the processing is not performed.

In the case of the sensor 40, the control unit 41 executes steps S11, S12, and S13 described above in a predetermined time period. In the case of the tool 50, the control unit 51 executes steps S11, S12, and S13 described above in a predetermined time period.

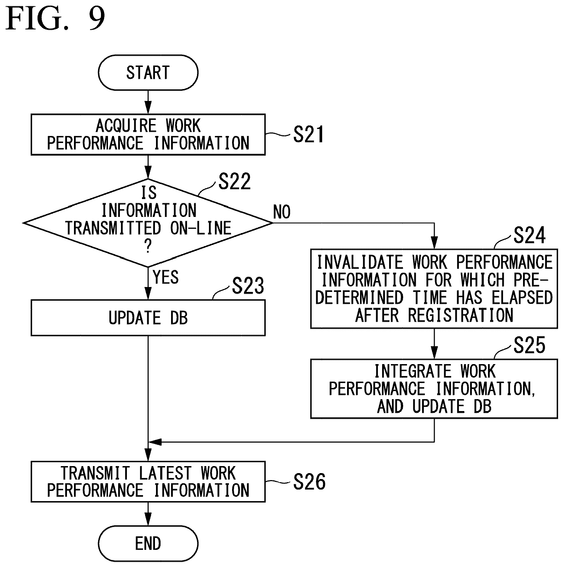

Next, processing of the server 10 when the work performance information or the like is received from the terminal device 20, the sensor 40, and the tool 50 will be described with reference to Fig. 9.

Fig. 9 is a first flowchart illustrating an example of processing of a server according to an embodiment. The work performance information integration unit 131 acquires the work performance information through the communication unit 15 (step S21). The work performance information integration unit 131 determines whether the information is transmitted on-line on the basis of time information transmitted together with the work performance information (step S22). In the case of the work performance information transmitted in an on-line state (step S22; Yes), the control unit 23 registers the work performance information in the work performance information DB 161 on the basis of a predetermined rule (step S23). In the case of the work performance information which is not transmitted in an on-line state (step S22; No), the work performance information integration unit 131 invalidates the work performance information when the time information transmitted together with the work performance information is earlier than a predetermined time (for example, 24 hours) or longer (step S24). The work performance information integration unit 131 performs the integration process described with reference to Fig. 5 on the basis of a predetermined "job rule" and "person rule" for work performance information of which the time information is within a predetermined time, and updates the work performance information DB 161 (step S25). In this case, the work performance information integration unit 131 records the work performance information received from the terminal device 20 in a separate area from the work performance information DB 161 in the storage unit 16 for the purpose of backup. The control unit 13 transmits the latest work performance information to the terminal device 20 (step S26).

The determination in step S22 is also No for the work performance information whose transfer to the server 10 is delayed by going through the terminal device 30 for management or by using the storage medium 60, and the processes of steps S24 and 25 are executed.

In a case where a measured value indicating that work is in progress is received from the sensor 40, for example, the work performance information integration unit 131 creates work performance information by regarding a time at which such a measured value (for example, when a worker is working, a temperature above a threshold is detected) is initially received as the start of a job and a time at which the measured value is finally received as the completion of the job, and registers it in the work performance information DB 161. In the case of the tool 50, the work performance information is created by regarding a time at which a control signal indicating that work is in progress is initially received as the start of a job and a time at which such a control signal is finally received as the completion of the job, and is registered in the work performance information DB 161. In addition, in a case where the numbers of sensors 40 and tools 50 are plural and time zones from the start of the created work performance information to the completion thereof overlap each other, the work performance information integration unit 131 also performs the integration process on the work performance information based on the sensors 40 and the tools 50.

Next, a process of monitoring the communication state of the terminal device 20 performed by the server 10 will be described.

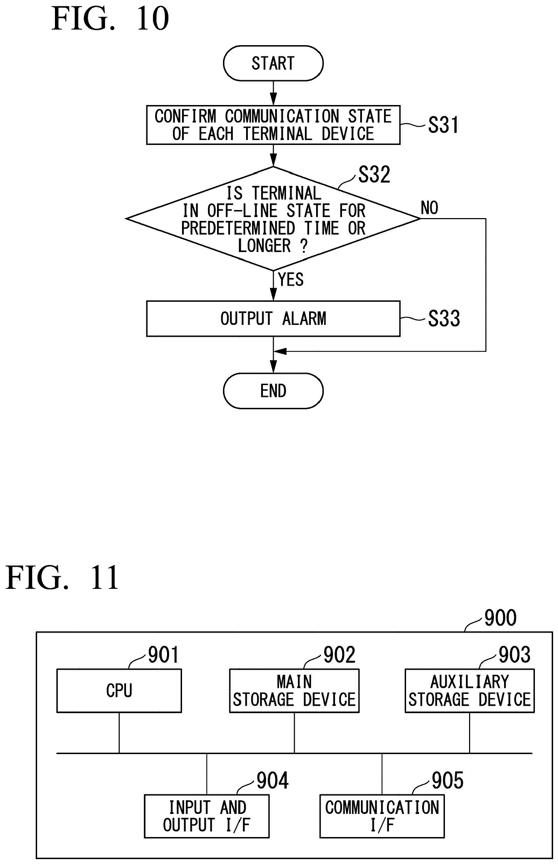

Fig. 10 is a second flowchart illustrating an example of processing of the server according to an embodiment. The communication state monitoring unit 132 performs the following processing in a predetermined control period. The communication state monitoring unit 132 confirms the communication state of each terminal device 20 using the communication unit 25 (step S31). The communication state monitoring unit 132 records the confirmed communication state (an on-line state or an off-line state) of each terminal device 20 in the storage unit 16 in association with a confirmed time. The communication state monitoring unit 132 determines whether there is a terminal device 20 that has been in an off-line state for a predetermined time or longer (step S32). In a case where there is a terminal device 20 that has been in an off-line state for a predetermined time or longer (step S32; Yes), the communication state monitoring unit 132 extracts identification information of such a terminal device 20, and outputs an alarm using the output unit 14 (step S33). For example, the output unit 14 displays the identification information of the terminal device 20 that has been in an off-line state, the name of a worker who uses the terminal device 20, or the like on the display unit 11. A manager refers to the displayed information to prompt a worker who uses a corresponding terminal device 20 to bring the terminal device 20 to a good communication environment, or the like, so that the work performance information is transmitted to the server 10.

In step S32, the communication state monitoring unit 132 may extract a terminal device 20 for which a predetermined time or longer has elapsed since the work performance information was transmitted finally.

As described above, according to the work performance management system 1, (1) since the terminal device 20 includes the work performance information DB 261 (local), the work performance information can be registered even in an off-line state. (2) Since the work performance information in an off-line state is registered in the work performance information DB 261 (local), the terminal device 20 can transmit the work performance information to the server 10 when a communication situation changes from an off-line state to an on-line state. (3) The work performance information integration unit 131 can integrate the work performance information registered in an off-line state and the work performance information registered in an on-line state so as to be logically matched, and register it in the work performance information DB 161. (4) Since the server 10 and the terminal device 20 have a function of outputting an alarm when an off-line state continues, the server 10 can collect the work performance information from the terminal device 20 without omission by taking appropriate measures. For example, in an environment in which communication is not stable, it is probable that all the terminal devices 20 are in an on-line state all the time, all the terminal devices 20 are in an off-line state all the time, some terminal devices 20 are in an off-line state all the time, terminal devices 20 in an off-line state are switched irregularly, and the like. However, based on the functions of the above (1) to (4), a worker can always input the work performance information to the terminal device 20 without depending on the communication state, and the server 10 can collect the work performance information which is input to each terminal device 20 widely and without omission, correct the collected information to logically matched work performance information and manage it. This makes it possible to perform high-accuracy work performance management even in an environment in which a communication state is unstable.

Hereinbefore, although a case in which work performance in a manufacturing plant is managed has been performed as an example, the work performance management system 1 of the present disclosure can be used for work performance management not only in a plant but also in all industries. For example, it can also be applied to the loading, unloading, or rearrangement work of baggage in a warehouse, transportation business such as home delivery, work in a construction site, various types of work in a retail store, document creation or design work in an office, office work, and the like.

Fig. 11 is a diagram illustrating an example of a hardware configuration of a work performance management system according to each embodiment.

A computer 900 includes a CPU 901, a main storage device 902, an auxiliary storage device 903, an input and output interface 904, and a communication interface 905.

The server 10 and the terminal device 20 described above are mounted in the computer 900. Each of the above-described functions is stored in the auxiliary storage device 903 in the format of a program. The CPU 901 reads out a program from the auxiliary storage device 903, develops the program into the main storage device 902, and executes the above-described processing in accordance with the program. In addition, the CPU 901 secures a storage area in the main storage device 902 in accordance with the program. In addition, the CPU 901 secures a storage area for storing data during processing in the auxiliary storage device 903 in accordance with the program.

A program for realizing all or some of functions of the server 10 and the terminal device 20 is recorded in a computer readable recording medium, and thus processing of each functional unit may be performed by causing a computer system to read and execute the program recorded in this recording medium. The term "computer system" referred to here is assumed to include an OS and hardware such as peripheral devices. In addition, in a case where a WWW system is used, the "computer system" is also assumed to include a homepage providing environment (or a display environment). In addition, the term "computer readable recording medium" refers to a portable medium such as a CD, a DVD, or a USB, or a storage device such as a hard disk built into a computer system. In addition, in a case where this program is delivered to the computer 900 through a communication line, the computer 900 having received this delivery may develop the program into the main storage device 902 and execute the process. In addition, the above-mentioned program may be a program which is used for realizing a portion of the aforementioned functions, and may be a program which is capable of realizing the aforementioned functions by a combination of programs previously recorded in the computer system.

As stated above, although some embodiments according to the present disclosure have been described, all these embodiments have been presented by way of example only, and are not intended to limit the scope of the invention. Indeed, these embodiments described herein may be embodied in a variety of other forms; furthermore, various omissions, substitutions and changes in the form of the embodiments described herein may be made without departing from the spirit of the inventions. The appended claims and their equivalents are intended to cover such forms or modifications as would fall within the scope and spirit of the invention.

### <Addition>

A work performance management system 1, a work management method, and a program according to each embodiment are ascertained, for example, as follows.
(1) According to a first aspect, a work performance management system 1 is provided including: one or a plurality of terminal devices 20; and a server 10, wherein the terminal device 20 includes a database configured to store work performance information indicating a situation of execution of work (a work performance information DB 261 (local)), and a control unit configured to accept an input of the work performance information, transmit the work performance information to the server 10 in a state in which communication is possible, and register the work performance information in the database in a state in which communication is not possible, and the server 10 includes a work performance information integration unit 131 configured to acquire the work performance information transmitted from the terminal device and integrate the acquired information so as to be logically matched.
(2) According to a work performance management system 1 of a second aspect, in the work performance management system 1 of (1), the work performance information integration unit 131 integrates the work performance information so that, when attention is paid to one piece of work, logically matched work performance is recorded as performance of the work (on the basis of a "job rule").
(3) According to a work performance management system 1 of a third aspect, in the work performance management system 1 of (1) to (2), the work performance information integration unit 131 integrates the work performance information so that, when attention is paid to one worker, logically match work performance is recorded as performance of work of the worker (on the basis of a "person rule").
(4) According to a work performance management system 1 of a fourth aspect, in the work performance management system 1 of (1) to (3), the work performance information transmitted from the terminal device 20 includes work performance information which is input when communication between the terminal device 20 and the server 10 is not possible.
(5) According to a work performance management system 1 of a fifth aspect, in the work performance management system 1 of (1) to (4), the work performance information integrated by the work performance information integration unit 131 includes the work performance information which is input to the terminal device 20 and then is transferred to the server 10 using the portable storage medium 60.
(6) According to a work performance management system 1 of a sixth aspect, the work performance management system 1 of (1) to (5), further includes an intermediate terminal device (a terminal device 30 for management), and the work performance information integrated by the work performance information integration unit 131 includes the work performance information which is input to the terminal device 20 and then is transferred to the server 10 through the intermediate terminal device.
(7) According to a work performance management system 1 of a seventh aspect, in the work performance management system 1 of (1) to (6), the work performance information includes any of start of work, participation in work, interruption of work, resumption of work, completion of work, and cancellation of work and its input time.
(8) According to a work performance management system 1 of an eighth aspect, in the work performance management system 1 of (1) to (7), the control unit 23 transmits the work performance information registered in the database (the work performance information DB 261 (local)) to the server 10 in a case of change from a state in which communication is not possible to a state in which communication is possible.
(9) According to a work performance management system 1 of a ninth aspect, in the work performance management system 1 of (1) to (8), the server 10 further includes a communication state monitoring unit 132 configured to extract the terminal device 20 in which a situation where communication is not possible continues for a predetermined time or longer, and an output unit 14 configured to output identification information of the terminal device 20 extracted by the communication state monitoring unit 132.
(10) According to a work performance management system 1 of a tenth aspect, the work performance management system 1 of (1) to (9) further includes: a sensor 40 having a communication means (a communication unit 42); and an instrument (a tool 50) used for work having a communication means (a communication unit 52), and the work performance information integration unit 131 creates work performance information on the basis of a detection value of the sensor transmitted by the communication means of the sensor 40 and a control signal of the instrument transmitted by the communication means of the instrument (the tool 50).
(11) According to an eleventh aspect, a work performance management method is provided including: a step of causing a terminal device to acquire work performance information indicating a situation of execution of work; a step of causing the terminal device to confirm a state of communication with a server; a step of causing the terminal device to register the work performance information in a database included in the terminal device in a state in which communication is not possible; a step of causing the terminal device to transmit the work performance information to the server in a state in which communication is possible; and a step of causing the server to acquire the work performance information transmitted from the terminal device and integrate the acquired information so as to be logically matched.
(12) According to a twelfth aspect, a program is provided causing a computer of a terminal device to execute: a step of acquiring work performance information indicating a situation of execution of work; a step of confirming a state of communication with a server; a step of registering the work performance information in a database included in the terminal device in a state in which communication is not possible; and a step of transmitting the work performance information to the server in a state in which communication is possible, and causing a computer of the server to execute a step of acquiring the work performance information transmitted from the terminal device and integrating the acquired information so as to be logically matched.

While preferred embodiments of the invention have been described and illustrated above, it should be understood that these are exemplary of the invention and are not to be considered as limiting. Additions, omissions, substitutions, and other modifications can be made without departing from the spirit or scope of the present invention. Accordingly, the invention is not to be considered as being limited by the foregoing description, and is only limited by the scope of the appended claims.

### EXPLANATION OF REFERENCES

10 Server
11 Display unit
12 Acquisition unit
13 Control unit
131 Work performance information integration unit
132 Communication state monitoring unit
14 Output unit
15 Communication unit
16 Storage unit
20 Terminal device
21 Display unit
22 Input unit
23 Control unit
24 Output unit
25 Communication unit
26 Storage unit
30 Terminal device for management
31 Display unit
32 Input unit
33 Control unit
34 Output unit
35 Communication unit
36 Storage unit
40 Sensor
41 Control unit
42 Communication unit
43 Storage unit
50 Tool
51 Control unit
52 Communication unit
53 Storage unit
900 Computer
901 CPU
902 Main storage device
903 Auxiliary storage device
904 Input and output interface
905 Communication interface

## Claims

1. A work performance management system comprising:
one or a plurality of terminal devices; and
a server,
wherein the terminal device includes
a database configured to store work performance information indicating a situation of execution of work, and
a control unit configured to accept an input of the work performance information, transmit the work performance information to the server in a state in which communication is possible, and register the work performance information in the database in a state in which communication is not possible, and
the server includes a work performance information integration unit configured to acquire the work performance information transmitted from the terminal device and integrate the acquired information so as to be logically matched.

2. The work performance management system according to claim 1, wherein the work performance information integration unit integrates the work performance information so that, when attention is paid to one piece of work, logically matched work performance is recorded as performance of the work.

3. The work performance management system according to claim 1 or 2, wherein the work performance information integration unit integrates the work performance information so that, when attention is paid to one worker, logically matched work performance is recorded as performance of work of the worker.

4. The work performance management system according to any one of claims 1 to 3, wherein the work performance information transmitted from the terminal device includes work performance information which is input when communication between the terminal device and the server is not possible.

5. The work performance management system according to any one of claims 1 to 4, wherein the work performance information integrated by the work performance information integration unit includes the work performance information which is input to the terminal device and then is transferred to the server using a portable storage medium.

6. The work performance management system according to any one of claims 1 to 5, further comprising an intermediate terminal device,
wherein the work performance information integrated by the work performance information integration unit includes the work performance information which is input to the terminal device and then is transferred to the server through the intermediate terminal device.

7. The work performance management system according to any one of claims 1 to 6, wherein the work performance information includes any of start of work, participation in work, interruption of work, resumption of work, completion of work, and cancellation of work and its input time.

8. The work performance management system according to any one of claims 1 to 7, wherein the control unit transmits the work performance information registered in the database to the server in a case of change from a state in which communication is not possible to a state in which communication is possible.

9. The work performance management system according to any one of claims 1 to 8, wherein the server further includes
a communication state monitoring unit configured to extract the terminal device in which a situation where communication is not possible continues for a predetermined time or longer, and
an output unit configured to output identification information of the terminal device extracted by the communication state monitoring unit.

10. The work performance management system according to any one of claims 1 to 9, further comprising:
a sensor having a communication means; and
an instrument used for work having a communication means,
wherein the work performance information integration unit creates work performance information on the basis of a detection value of the sensor transmitted by the communication means of the sensor and a control signal of the instrument transmitted by the communication means of the instrument.

11. A work performance management method comprising:
a step of causing a terminal device to acquire work performance information indicating a situation of execution of work;
a step of causing the terminal device to confirm a state of communication with a server;
a step of causing the terminal device to register the work performance information in a database included in the terminal device in a state in which communication is not possible;
a step of causing the terminal device to transmit the work performance information to the server in a state in which communication is possible; and
a step of causing the server to acquire the work performance information transmitted from the terminal device and integrate the acquired information so as to be logically matched.

12. A program causing a computer of a terminal device to execute:
a step of acquiring work performance information indicating a situation of execution of work;
a step of confirming a state of communication with a server;
a step of registering the work performance information in a database included in the terminal device in a state in which communication is not possible; and
a step of transmitting the work performance information to the server in a state in which communication is possible, and
causing a computer of the server to execute
a step of acquiring the work performance information transmitted from the terminal device and integrating the acquired information so as to be logically matched.
